Europäisches Patentamt

European Patent Office

Office européen des brevets

(19)

(11) Veröffentlichungsnummer : **0 330 930 B1**

# (12) EUROPÄISCHE PATENTSCHRIFT

(45) Veröffentlichungstag der Patentschrift :
**20.05.92 Patentblatt 92/21**

(51) Int. Cl.$^5$ : **F16H 55/44,** F16H 57/02

(21) Anmeldenummer : **89102733.6**

(22) Anmeldetag : **17.02.89**

(54) **Zahnrad.**

(30) Priorität : **24.02.88 DE 3805777**

(43) Veröffentlichungstag der Anmeldung :
**06.09.89 Patentblatt 89/36**

(45) Bekanntmachung des Hinweises auf die
Patenterteilung :
**20.05.92 Patentblatt 92/21**

(84) Benannte Vertragsstaaten :
**BE CH DE ES FR GB IT LI NL SE**

(56) Entgegenhaltungen :
**EP-A- 0 048 314**
**DE-A- 2 653 334**
**DE-A- 2 800 561**
**DE-A- 2 826 022**

(56) Entgegenhaltungen :
**DE-A- 3 530 190**
**DE-A- 3 803 684**
**FR-A- 2 470 308**
**GB-A- 881 262**

(73) Patentinhaber : **Emitec Gesellschaft für**
**Emissionstechnologie mbH**
**Hauptstrasse 150**
**W-5204 Lohmar 1 (DE)**

(72) Erfinder : **Swars, Helmut**
**Riedweg 11**
**W-5060 Bergisch Gladbach 1 (DE)**

(74) Vertreter : **Neumann, Ernst Dieter, Dipl.-Ing. et**
**al**
**HARWARDT NEUMANN PATENTANWÄLTE**
**Scheerengasse 2 Postfach 1455**
**W-5200 Siegburg (DE)**

EP 0 330 930 B1

## Beschreibung

Die Erfindung betrifft ein auf einem aufgeweiteten Rohrabschnitt kraftschlüssig festgelegtes Zahnrad.

Das Festlegen von Zahnrädern auf Hohlwellen durch hydraulisches Aufweiten derselben ist in der DE-A-38 03 684 vorbeschrieben. Hierbei sind die Zahnräder in massiver, an sich bekannter Ausführung vorgeschlagen, um dem durch das aufgeweitete Rohr erzeugten Druck elastischen Widerstand entgegensetzen zu können. Der Nabenabschnitt kann dabei wie bei Schrumpf- oder Lötverbindungen rein zylindrisch sein. Die als Guß- oder Schmiedeteile ausführbaren Zahnräder erhöhen in nachteiliger Weise das Gewicht und Massenträgheitsmoment der an sich gewichtsgünstigen Hohlwelle.

Aus der DE-A-35 30 190 ist ein Zahnrad aus Kunststoffmaterial bekannt, das zur Erhöhung der Stabilität eine mehrfach rechtwinklig abgewinkelte Stahleinlage hat, die mit einem Nabenabschnitt auf einem Zapfen aufsitzt. Dieser Nabenabschnitt hat eine Nut zum formschlüssigen Eingriff einer Paßfeder. Ein auf den Nabenabschnitt abgeschobener Stützring 5 dient zur Verhinderung eines Ausknickens des Nabenabschnittes beim Herstellen einer kraftschlüssigen Verbindung, die an Stirnflächen des Zahnrades erzeugt wird, mit der dieses mittels einer Schraube an einem Wellenabsatz festgelegt wird. Der Stützring nimmt keine radialen Kräfte auf.

Aus der DE-A-28 26 022 ist ein Leistungsverzweigungsgetriebe bekannt, in dem im Bereich von Zahnrädern verdickte Wellen und mit Zahnrädern versehene Hohlwellen verwendet werden. Besonderheiten der Verbindung sind dabei nicht erkennbar. Die Zahnräder sind als massive Bauteile ausgeführt.

Der vorliegenden Erfindung liegt die Aufgabe zugrunde, ein für den genannten Anwendungsfall geeignetes Zahnrad bereitzustellen, das besonders einfach und billig herstellbar ist und das sehr leicht baut und doch sicher festgelegt ist. Die Lösung hierfür ist gekennzeichnet durch einen aus Blech bestehenden Scheibenkörper mit einem zylindrischen Nabenabschnitt und einen darauf aufgeschobenen Stützring mit gegenüber dem Rohrabschnitt höherer Streckgrenze des Materials sowie zumindest einen am Scheibenkörper befestigten Zahnkranz. Je nach Materialpaarung kann es günstig sein, wenn der Stützring auch einen gegenüber dem Rohrkörper größeren E-Modul aufweist. Die hierdurch gegebene Konstruktion ist trotz Verwendung leichten und billigen Materials für den Scheibenkörper zur Anwendung der genannten Befestigungsart geeignet, da der lose aufgeschobene Stützring beim plastischen Aufweiten des Rohrabschnitts die erforderlichen Vorspannungskräfte erzeugt und den Nabenabschnitt radial einspannt.

Der Radkörper kann aus einem einzigen Scheibenkörper, der Z-förmig oder C-förmig - ggfs. in axialer Verzerrung - verformt ist bestehen oder aus mehreren Scheibenkörpern, die zu einer gegenüber dem Rohrkörper geschlossenen Form zusammengesetzt sein können. Die einzelnen Scheibenkörper können hierbei wiederum - auch bei axialer Verzerrung - im Längsschnitt Z-förmig oder C-förmig ggfs. auch L-förmig sein, wobei jeder der Scheibenkörper einen zylindrischen Nabenabschnitt für die oben beschriebene Verbindung mit dem Rohrkörper aufweist. Ein oder mehrere äußere zylindrische oder leicht konische Außenabschnitte, auf denen jeweils Zahnkränze aufsitzen, sind vorteilhaft, nicht jedoch notwendig. Zur Aussteifung können Verstärkungsrippen vorgesehen sein, die gleichzeitig eine unmittelbare oder mittelbare Abstützung für den Zahnkranz darstellen können.

Die Befestigung des Zahnkranzes außen am Scheibenkörper ist auf verschiedene Weise zu lösen, beispielsweise kommen hier übliche Preß-, Schrumpf-, Löt- oder Schweißverbindungen in Frage.

Nach einer besonders günstigen Ausführung wird jedoch ein zylindrischer oder ggfs. konischer Außenabschnitt am Scheibenkörper vorgesehen, auf den der angepaßte Zahnkranz aufgesetzt und in den ein entsprechender Stütz- oder Spreizring eingeschoben wird. Auch bei dieser Verbindung, die der Welle-Naben-Verbindung des Scheibenkörpers am Rohr ähnelt, kann ein plastisches Umformen des Stütz- oder Spreizringes vorgesehen sein, insbesondere bei zylindrischer Form des Außenabschnitts am Scheibenkörper. Es kann auch eine reine Klemmverbindung durch axiales Einschieben des Stütz- oder Spreizringes hergestellt werden, insbesondere, wenn die Berührungsflächen konische Form mit einem Öffnungswinkel im Bereich der Selbsthemmung haben. Eine weitere Alternative besteht darin, daß bei eingeschobenem Stütz- oder Klemmring der Zahnkranz durch Rollieren oder ein ähnliches Verfahren auf dem Scheibenkörper befestigt wird.

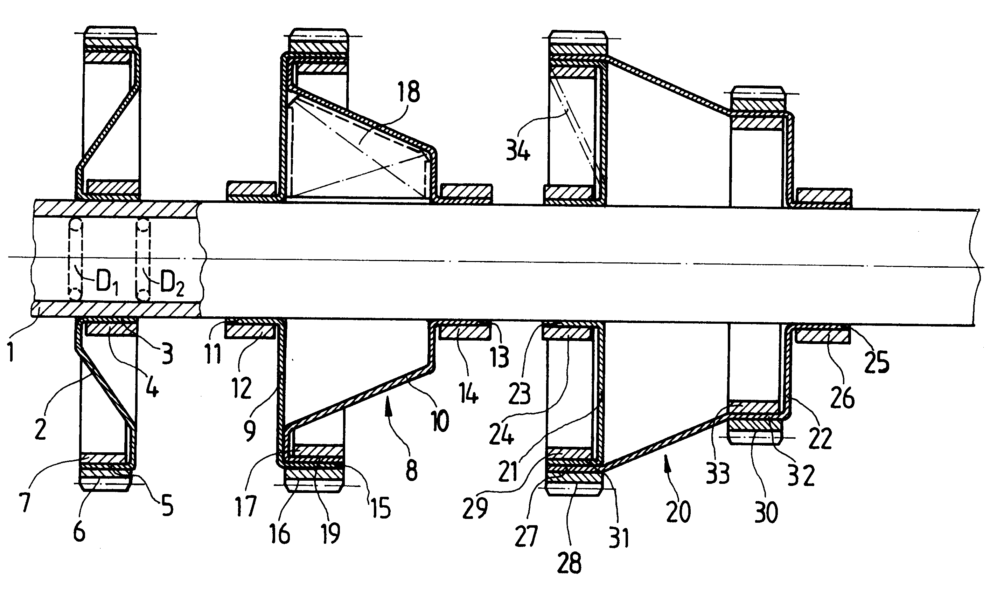

Ein erfindungsgemäßes Ausführungsbeispiel ist in der beigefügten Zeichnung dargestellt.

Hierbei ist im einzelnen im Längsschnitt ein Rohrkörper 1 zu erkennen, auf dem drei erfindungsgemäße Zahnräder festgelegt sind.

Links ist ein Radkörper aus einem einzelnen Scheibenkörper 2 mit im Längsschnitt Z-förmiger Gestalt aufgeschoben, der einen zylindrischen Nabenabschnitt 3 aufweist, der in unmittelbarem Kontakt mit dem Rohrkörper 1 steht. Auf den Nabenabschnitt 3 ist ein Stützring 4 aufgeschoben, der nach dem plastischen Aufweiten des Rohrabschnitts 1 in dem durch die gestrichelten Dichtungen $D_1$, $D_2$ begrenzten Bereich den Nabenabschnitt 3 einspannt. Außen weist der Scheibenkörper 2 einen zylindrischen Außenabschnitt 5 auf, auf den ein Zahnkranz 6 aufgeschoben ist, der durch einen eingepreßten Spreizring 7 verspannt ist. Zwischen zylindrischem Außenabschnitt 5 und Zahnkranz 6 kann auch eine formschlüssige Verbindung bestehen.

In der Mitte ist ein Radkörper 8 von geschlossener Form gezeigt, der aus einer Z-förmigen Scheibenkörper 9 und einem verzerrt C-förmigen Scheibenkörper 10 zusammengesetzt ist. Der Scheibenkörper 9 hat einen zylindrischen Nabenabschnitt 11, der auf dem Rohrkörper 1 aufsitzt. Auf den Nabenabschnitt 11 ist ein Stützring 12 aufgeschoben, der nach dem plastischen Aufweiten eines Rohrabschnitts den Nabenabschnitt 11 einspannt. Die Scheibenkörper 10 weist einen in entgegengesetzter Richtung gerichteten Nabenabschnitt 13 auf, der den Rohrabschnitt 1 umschließt und auf den ein Stützring 14 aufgeschoben ist, der nach dem plastischen Aufweiten des Rohrabschnitts 1 im entsprechenden Bereich den Nabenabschnitt 13 einspannt. Der Scheibenkörper 9 weist radial außen ein zylindrischen Außenabschnitt 15 auf, auf den ein Zahnkranz 16 aufgeschoben ist, der über einen Spreiz- oder Stützring 17 gesichert ist. Der zweite Scheibenkörper 10 weist einen in gleicher Richtung wie der innere Nabenabschnitt 13 weisenden äußeren zylindrischen Außenabschnitt 19 auf, der sich in den zylindrischen Außenabschnitt 15 einfügt und gemeinsam mit diesem zwischen Stützring oder Klemmring 17 und Zahnkranz 16 eingeklemmt ist. Wie in der oberen Bildhälfte dargestellt, können Verstärkungsrippen 18 einzeln oder zusammenhängend vorgesehen sein, die sich mit Umbördelungen im Randbereich innen an den Scheibenkörper 8 anschmiegen.

Rechts ist ein dritter Radkörper 20 dargestellt, der wiederum geschlossene Form gegenüber dem Rohrkörper aufweist und aus einem ersten C-förmigen Scheibenkörper 21 und einem verzerrten doppelt Z-förmigen Scheibenkörper 22 besteht. Am Scheibenkörper 21 ist ein zylindrischer Nabenabschnitt 23 ausgebildet, auf den ein Stützring 24 aufgeschoben ist, der den Nabenabschnitt nach dem plastischen Aufweiten des Rohrabschnitts im entsprechenden Axialbereich einspannt. Der Scheibenkörper 22 weist einen entgegengesetzt gerichteten Nabenabschnitt 25 auf, auf den ein Stützring 26 aufgeschoben ist, der nach dem plastischen Aufweiten des Rohrabschnitts 1 die entsprechende Funktion erfüllt. Auf einem ersten zylindrischen Außenabschnitt 27 des Scheibenkörpers 22 ist ein Zahnkranz 28 aufgeschoben, wobei ein Stütz-, Spreiz- oder Klemmring 29 den Außenabschnitt 27 gegenüber dem Zahnkranz 28 zusammen mit einem in den Außenabschnitt 27 eingreifenden zylindrischen Außenabschnitt 31 des Scheibenkörpers 21 einspannt. Die Ausführung ist ähnlich derjenigen bei der mittlere Scheibe. Ein weiterer Zahnkranz 30 sitzt auf einem axial und radial versetzten zylindrischen Außenabschnitt 32 des Scheibenkörpers 22, in die ein Spreiz-, Klemm- oder Stützring 33 eingeschoben ist. Wie in der oberen Bildhälfte angedeutet, kann anstelle der C-förmigen Scheibenkörpers 21 auch ein Z-förmiger Scheibenkörper 34 Verwendung finden. Die zylindrischen Außenabschnitte, auf denen die Zahnkränze aufsitzen, können jeweils auch konisch ausgestaltet sein, wobei die Klemmringe entsprechende konische Form mit Öffnungswinkeln im Bereich der Selbsthemmung bei geringem radialen Übermaß haben.

## Patentansprüche

1. Auf einem aufgeweiteten Rohrabschnitt (1) kraftschlüssig festgelegtes Zahnrad gekennzeichnet durch zumindest einen aus Blech bestehenden Scheibenkörper (2, 9, 10, 21, 22) mit einem zylindrischen Nabenabschnitt (3, 11, 13, 23, 25) und einen darauf aufgeschobenen Stützring (4, 12, 14, 24, 26) mit gegenüber dem Rohrabschnitt (1) höherer Streckgrenze sowie zumindest einen am Scheibenkörper (2, 9, 10, 21, 22) befestigten Zahnkranz (6, 16, 28, 30).

2. Zahnrad nach Anspruch 1,
dadurch gekennzeichnet,
daß ein aus Blech bestehende Radkörper (8, 20) aus mehreren Scheibenkörpern (9, 10; 21, 22) mit jeweils einem zylindrischen Nabenabschnitt (11, 13; 23, 25) besteht.

3. Zahnrad nach einem der Ansprüche 1 oder 2,
dadurch gekennzeichnet,
daß mehrere Zahnkränze (28, 30) an einem - insbesondere aus mehreren Scheibenkörpern (21, 22) bestehenden - Radkörper (20) befestigt sind.

4. Zahnrad nach einem der Ansprüche 1 bis 3,
dadurch gekennzeichnet,
daß ein Zahnkranz (6, 16, 28, 30) auf einen zylindrischen Außenabschnitt (5, 15, 27, 32) eines Scheibenkörpers (2, 9, 10, 21, 22) aufgeschoben und mit diesem verbunden ist.

5. Zahnrad nach einem der Ansprüche 1 bis 4,
dadurch gekennzeichnet,
daß ein Zahnkranz (6, 16, 28, 30) und ein Scheibenkörper (2, 9, 10, 21, 22) durch einen in den Scheibenkörper eingeschobenen Spreizring (7, 17, 29, 33) miteinander verspannt sind.

6. Zahnrad nach einem der Ansprüche 1 bis 5,

dadurch gekennzeichnet,
daß die Scheibenkörper (2, 8, 9, 21, 22) im Längsschnitt Z-förmig sind.

7. Zahnrad nach einem der Ansprüche 1 bis 5,
dadurch gekennzeichnet,
daß die Scheibenkörper (2, 8, 9, 21, 22) im Längsschnitt C-förmig sind.

8. Zahnrad nach einem der Ansprüche 1 bis 5,
dadurch gekennzeichnet,
daß der - insbesondere aus mehreren im Längsschnitt Z-förmigen und/oder C-förmigen Scheibenkörper (9, 10; 21, 22) zusammengesetzte - Radkörper (8; 20) im Längsschnitt eine gegenüber dem Rohrabschnitt (1) geschlossene Form bildet.

9. Zahnrad nach einem der Ansprüche 1 bis 8,
dadurch gekennzeichnet,
daß die Scheibenkörper (2, 8, 9, 21, 22) versteifende Ausprägungen aufweisen.

10. Zahnrad nach einem der Ansprüche 1 bis 8,
dadurch gekennzeichnet,
daß in schalenförmige Bereiche der Scheibenkörper (2, 8, 9, 21, 22) einzelne oder zusammenhängende - insbesondere mehrfach abgekantete oder umgefalzte - Verstärkungsrippen (18) eingesetzt sind.


## Claims

1. A gearwheel secured to an expanded tube portion (1) in a force-locking way,
characterised by at least one sheet-metal disc member (2, 9, 10, 21, 22) with a cylindrical hub portion (3, 11, 13, 23, 25), by a supporting ring (4, 12, 14, 24, 26) which is slid thereon and whose yield point is higher than that of the tube portion (1) and by at least one gear ring (6, 16, 28, 30) secured to the disc member (2, 9, 10, 21, 22).

2. A gearwheel according to claim 1,
characterised in
that the sheet-metal wheel member (8, 20) consists of several disc members (9, 10; 21, 22) each having a cylindrical hub portion (11, 13; 23, 25).

3. A gearwheel according to any one of claims 1 or 2,
characterised in
that several gear rings (28, 30) are secured to a wheel member (20) especially consisting of several disc members (21, 22).

4. A gearwheel according to any one of claims 1 to 3,
characterised in
that the gear ring (6, 16, 28, 30) is slid on and connected to a cylindrical outer portion (5, 15, 27, 32) of a disc member (2, 9, 10, 21, 22).

5. A gearwheel according to any one of claims 1 to 4,
characterised in
that a gear ring (6, 16, 28, 30) and a disc member (2, 9, 10, 21, 22) are tensioned relative to each other by an expanding ring (7, 17, 29, 33) inserted into the disc member.

6. A gearwheel according to any one of claims 1 to 5,
characterised in
that the longitudinal section of the disc members (2, 8, 9, 21, 22) is Z-Shaped.

7. A gearwheel according to one of claims 1 to 5,
characterised in
that the longitudinal section of the disc members (2, 8, 9, 21, 22) is C-shaped.

8. A gearwheel according to any one of claims 1 to 5,
characterised in
that the longitudinal section of the wheel member (8; 20) especially consisting of several disc members (9, 10; 21, 22) with Z-shaped and/or C-shaped longitudinal sections has a closed shape relative to the tube portion (1).

9. A gearwheel according to any one of claims 1 to 8,
characterised in
that the disc members (2, 8, 9, 21, 22) comprise stiffening formations.

10. A gearwheel according to any one of claims 1 to 8,
characterised in

that individual or connected reinforcing ribs (18) especially edged or crimped several times are inserted into dish-shaped regions of the disc members (2, 8, 9, 21, 22).

**Revendications**

1. Roue dentée fixée par assemblage de forme sur une section de tube (1) élargie, caractérisée par au moins un corps de disque (2, 9, 10, 21, 22) en tôle comportant une section de moyeu (3, 11, 13, 23, 25) cylindrique et une bague d'appui (4, 12, 14, 24, 26) enfilée sur celle-ci, présentant une plus grande limite d'étirage que la section de tube (1), et au moins une couronne dentée (6, 16, 28, 30) fixée sur le corps de disque (2, 9, 10, 21, 22).

2. Roue dentée selon la revendication 1, caractérisée en ce que le corps de roue (8, 20) en tôle consiste en plusieurs corps de disque (9, 10 ; 21, 22) comportant chacun une section de moyeu (11, 13 ; 23, 25) cylindrique.

3. Roue dentée selon l'une des revendications 1 ou 2, caractérisée en ce que plusieurs couronnes dentées (28, 30) sont fixées sur un corps de roue (20) constitué en particulier par plusieurs corps de disque (21, 22).

4. Roue dentée selon l'une des revendications 1 à 3, caractérisée en ce qu'une couronne dentée (6, 16, 28, 30) est enfilée sur une section externe cylindrique (5, 15, 27, 32) d'un corps de disque (2, 9, 10, 21, 22) et est reliée à celle-ci.

5. Roue dentée selon l'une des revendications 1 à 4, caractérisée en ce qu'une couronne dentée (6, 16, 28, 30) et un corps de disque (2, 9, 10, 21, 22) sont serrés ensemble par une bague d'écartement (7, 17, 29, 33) insérée dans le corps de disque.

6. Roue dentée selon l'une des revendications 1 à 5, caractérisée en ce que les corps de disque (2, 8, 9, 21, 22) sont en forme de Z en coupe longitudinale.

7. Roue dentée selon l'une des revendications 1 à 5, caractérisée en ce que les corps de disque (2, 8, 9, 21, 22) sont en forme de C en coupe longitudinale.

8. Roue dentée selon l'une des revendications 1 à 5, caractérisée en ce que le corps de roue (8 ; 20) constitué en particulier par plusieurs corps de disque (9, 10 ; 21, 22) en forme de Z et/ou en forme de C en coupe longitudinale présente en coupe longitudinale une forme fermée par rapport à la section de tube (1).

9. Roue dentée selon l'une des revendications 1 à 8, caractérisée en ce que les corps de disque (2, 8, 9, 21, 22) comportent des empreintes de raidissement.

10. Roue dentée selon l'une des revendications 1 à 8, caractérisée en ce que des nervures de renforcement (18) isolées ou combinées, en particulier repliées ou serties plusieurs fois, sont disposées dans des domaines en forme de cuvette des corps de disque (2, 8, 9, 21, 22).